**Europäisches Patentamt**

**European Patent Office**

**Office européen des brevets**

(19)

(11) Veröffentlichungsnummer: **0 145 059**

**B1**

(12) **EUROPÄISCHE PATENTSCHRIFT**

(45) Veröffentlichungstag der Patentschrift:
08.06.88

(51) Int. Cl.⁴: **G 02 B 5/18**

(21) Anmeldenummer: **84201640.4**

(22) Anmeldetag: **13.11.84**

(54) Verfahren zum Herstellen eines Gitters und Verwendung des hergestellten Gitters.

(30) Priorität: **15.11.83 NL 8303906**

(43) Veröffentlichungstag der Anmeldung:
**19.06.85 Patentblatt 85/25**

(45) Bekanntmachung des Hinweises auf die Patenterteilung:
**08.06.88 Patentblatt 88/23**

(84) Benannte Vertragsstaaten:
**DE FR GB IT NL SE**

(56) Entgegenhaltungen:
**US-A-3 542 453**
**US-A-4 243 398**

(73) Patentinhaber: **N.V. Philips' Gloeilampenfabrieken,
Groenewoudseweg 1, NL- 5621 BA Eindhoven (NL)**

(72) Erfinder: **Khoe, Giok Djan, c/o INT.
OCTROOIBUREAU B.V. Prof. Holstlaan 6, NL-
5656 AA Eindhoven (NL)**
Erfinder: **Nicia, Antonius Josephus Adrianus, c/o
INT. OCTROOIBUREAU B.V. Prof. Holstlaan 6,
NL- 5656 AA Eindhoven (NL)**

(74) Vertreter: **Auwerda, Cornelis Petrus,
INTERNATIONAAL OCTROOIBUREAU B.V. Prof.
Holstlaan 6, NL- 5656 AA Eindhoven (NL)**

EP 0 145 059 B1

## Beschreibung

Die Erfindung bezieht sich auf ein Verfahren zum Herstellen eines optischen Gitters.

Bei einem bekannten Verfahren zur Herstellung eines optischen Gitters wird ein Metallkörper mit Rillen versehen, beispielsweise durch Ritzen mit einem Diamanten.

Der Metallkörper wird dann als Form gebraucht um Abdrucke in einer Lackschicht zu machen, die beispielsweise von einer Glasplatte getragen wird. Zum Schluss wird die Lackschicht mit einer Metallschicht bedeckt.

Die Regelmässigkeit und die Form der gebildeten Rillen sind für die Qualität des Gitters bestimmend.

Die Nachteile des angewandten Verfahrens bestehen insbesondere darin, dass das Produktionsverfahren kostspielig und die Lackschicht verletzlich ist.

Gitter werden meist in Instrumenten für wissenschaftlichen Gebrauch verwendet, deren Anzahl beschränkt ist, bei denen die Kosten eine relativ geringe Rolle spielen und bei denen die Umstände meist an die Anforderungen der Instrumente angepasst (konditioniert) werden können.

Bei Massengebrauch, beispielsweise auf dem Gebiete der Fernmeldetechnik müssen die Gitter jedoch preisgünstig und solide sein.

Die Erfindung hat nun zur Aufgabe, derartige Gitter zu schaffen. Der Erfindung liegt u.a. die Erkenntnis zugrunde, dass Gitter mit den gewünschten Eigenschaften bei Anwendung chemischer Techniken zur Bildung der Rillen erhalten werden.

Das eingangs erwähnte Verfahren ist nach der Erfindung dadurch gekennzeichnet, dass eine Oberfläche eines Substrates mit einer Anzahl nahezu gleich dicker Schichten versehen wird, deren Ätzgeschwindigkeit in einem bestimmten Ätzmittel entsprechend der Reihenfolge der Bildung der Schichten nahezu proportional zunimmt und dass eine Querschnittsfläche der Schichten dem Ätzmittel ausgesetzt wird, wodurch diese Fläche mit Stufen versehen wird, welche ein optisches Stufengitter bilden. Unter Ätzgeschwindigkeit in einem bestimmten Ätzmittel wird hier die Geschwindigkeit, mit der das Ätzmittel die Schichten angreift, verstanden.

Die mit Hilfe des erfindungsgemässen Verfahrens erhaltenen Gitter sind preisgünstig und formfest. Auch ist eine bestimmte Rillendichte auf der Oberfläche, d.h. die Anzahl Linien des Gitters je mm, auf einfache Weise verwirklichbar. Weiterhin kann auch der sogenannte Blase-Winkel, d.h. der Winkel, dessen Tangens der Ätztiefe einer jeweiligen Schicht geteilt durch die Schichtdicke entspricht, auf einfache Weise eingestellt werden.

Der Körper mit der auf diese Weise geätzten Oberfläche braucht nicht als Form zu dienen, sondern kan unmittelbar als Substrat für eine anzubringende Metallschicht benutzt werden.

Vorzugsweise beträgt die jeweilige Schichtdicke 1 - 3 μm, die Ätztiefe der jeweiligen Schichten 0,1 - 0,3 μm und der Blaze-Winkel 10 - 20°.

Die Gitter, die mit Hilfe des erfindungsgemässen Verfahrens hergestellt sind, eignen sich insbesondere zum Gebrauch in der Fernmeldetechnik bei Datenübertragung mit Hilfe von Lichtwellenleitern (LWL).

Ein Ausführungsbeispiel der Erfindung ist in der Zeichnung dargestellt und wird im folgenden näher beschrieben. Es zeigen

Fig. 1 eine schematische Darstellung eines Teils eines Körpers in einer Herstellungsstufe eines optischen Gitters,

Fig. 2 eine schematische Darstellung eines Schnitts durch einen Körper in einer nachfolgenden Herstellungsstufe eines optischen Gitters und

Fig. 3 einen schematischen Schnitt durch eine Vorrichtung zum Durchführen des erfindungsgemässen Verfahrens.

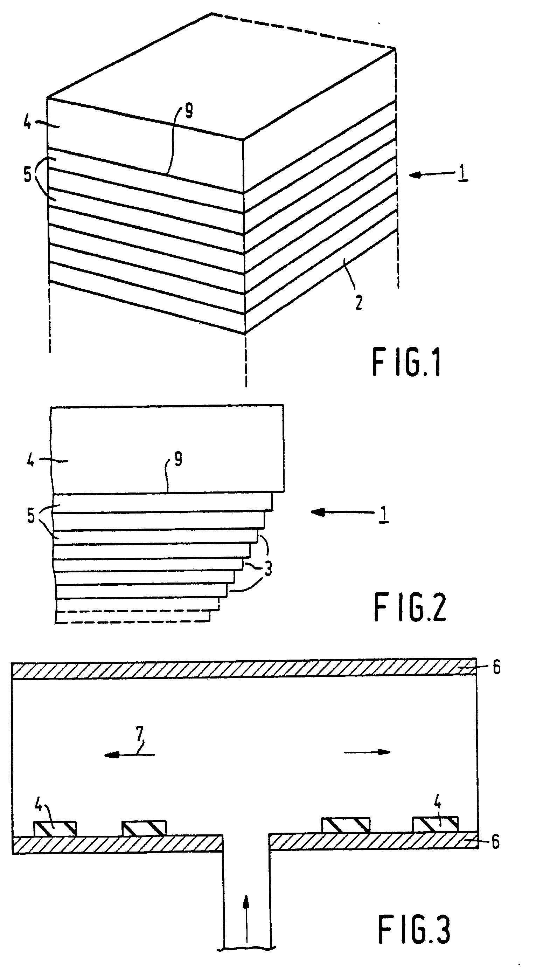

Bei dem erfindungsgemässen Verfahren zur Herstellung eines optischen Gitters wird von einem Körper 1 ausgegangen, dessen Oberfläche 2 mit äquidistanten Stufen 3 versehen wird. Nach der Erfindung wird eine Oberfläche 9 eines Substrates 4 mit einer Anzahl nahezu gleich dicker Schichten 5 versehen, deren Ätzgeschwindigkeit in einem bestimmten Ätzmittel entsprechend der Reihenfolge der Bildung der Schichten nahezu proportional zunimmt. Daraufhin wird eine Querschnittsoberfläche der Schichten 5 dem Ätzmittel ausgesetzt, wobei entsprechend Fig. 2 die Oberfläche mit den Stufen 3 gebildet wird.

Die Dicke der einzelnen Schichten 5 beträgt vorzugsweise 1 - 3 μm und der Unterschied in der Ätztiefe der Schichten 0,1 - 0,3 μm.

Bei der Herstellung des Gitters wird beispielsweise von einem oder mehreren Substraten 4 mit einer Kantenlänge (einem Durchmesser) von 20 mm, bestehend aus Quarzglas ausgegangen. Die Substrate 4 werden nach Fig. 3 in einen dosenförmigen Reaktor mit kapazitiv gekoppelten Platten 6, zwischen denen ein RHF-Feld mit einer Frequenz von 13 MHz erzeugt wird, gegeben.

Mit Hilfe eines nicht-isothermen Plasma-CVD-Verfahrens werden aus einer Gasphase die Schichten 5 auf dem Substrat 4 niedergeschlagen.

Unter einem nicht-isothermen Plasma-CVD-Verfahren wird ein Verfahren verstanden, bei dem mit einem sogenannten kalten Plasma gearbeitet wird, worin nur Elektronen eine hohe kinetische Energie aufweisen. Mit einem derartigen Plasma kann man sogar Gasgemische zum Reagieren bringen, die thermisch nicht reaktiv sind. Bei diesem Verfahren können mit Erfolg relativ niedrige Substrattemperaturen (60-80°C) angewandt werden und es werden rissfreie Schichten erhalten.

Die Substrate 4 befinden sich beim Niederschlagen der Schichten 5 auf einer Temperatur von 60°C. Die Schichten 5 werden aus einem Gasstrom 7 niedergeschlagen, der Silan ($SiH_4$), Ammoniak ($NH_3$), Argon (Ar), und schrittweise abnehmende Mengen Distickstoffoxyd ($N_2O$) enthält. Die Zusammensetzung der Gasphase wird auf übliche Weise diskontinuierlich mit kurzen Intervallen derart geändert, dass in einigen Stunden etwa 4000 Schichten mit einer Dicke von je etwa 1 µm bei einem Druck von 1 - 5 Torr niedergeschlagen werden. Die Zusammensetzung der Schichten variiert in praktisch gleichen Schritten und zwar zwischen Siliziumoxyd ($SiO_2$) und Siliziumnitrid ($Si_3N_4$).

Der auf diese Weise gebildete Körper 1 kann auf übliche Weise mit einer Oberfläche 2 versehen werden, beispielsweise senkrecht zu den Schichten 5.

Der Körper 1 wird nun mit Ausnahme der zu ätzenden Oberfläche 2 gegen ein aus Phosporsäure bestehendes Ätzmittel maskiert, dessen Ätzgeschwindigkeit für die Schichten 5 der Aufeinanderfolge der Schichten proportional ist.

Daraufhin werden die Schichten 5 nahezu senkrecht zu der Dickenrichtung geätzt, wobei die Stufen 3 gebildet werden.

Die Ätzgeschwindigkeit zwischen zwei aufeinanderfolgenden Schichten ist relativ gering, wodurch eine relativ geringe Abrundung an den Grenzen aufeinanderfolgender Schichten auftritt. In einigen Tagen wird ein Profil erhalten, wobei die Schritte zwischen aufeinanderfolgenden Schichten 0,1 µm und der Blaze-Winkel etwa 10° beträgt.

Auf übliche Weise werden die Stufen mit einer Metallschicht, bestehend aus Gold mit einer Dicke von 0,1 µm, bedeckt

Der Körper kann unmittelbar als optisches Gitter oder auch als Matrize verwendet werden, wie dies obenstehend beschrieben wurde.

Das erfindungsgemässe Verfahren macht die Herstellung preisgünstiger und solider optischer Gitter zum Gebrauch auf dem Gebiete der Fernmeldetechnik möglich.

**Patentansprüche**

1. Verfahren zum Herstellen eines optischen Gitters, dadurch gekennzeichnet, dass eine Oberfläche eines Substrates mit einer Anzahl nahezu gleich dicker Schichten versehen wird, deren Ätzgeschwindigkeit in einem bestimmten Ätzmittel entsprechend der Reihenfolge der Bildung der Schichten nahezu proportional zunimmt und dass eine Querschnittsfläche der Schichten dem Ätzmittel ausgesetzt wird, wodurch diese Fläche mit Stufen versehen wird, welche ein optisches Stufengitter bilden.

2. Verfahren nach Anspruch 1, dadurch gekennzeichnet, dass die Dicke der jeweiligen Schichten 1 - 3 µm beträgt.

3. Verfahren nach Anspruch 1 oder 2, dadurch gekennzeichnet, dass die Ätztiefe der jeweiligen Schichten 0,1 - 0,3 µm beträgt.

4. Verfahren nach einem der Ansprüche 1 bis 3, dadurch gekennzeichnet, dass der Blaze-Winkel 10° - 20° beträgt.

5. Verfahren nach einem der vorstehenden Ansprüche, dadurch gekennzeichnet, dass die Schichten mit Hilfe eines nichtisothermen Plasma-CVD-Verfahrens gebildet werden.

6. Verwendung des Gitters, das mit Hilfe des Verfahrens nach einem der vorstehenden Ansprüche hergestellt worden ist, in der Fernmeldetechnik.

**Claims**

1. A method of manufacturing an optical grating, characterized in that a surface of a substrate is provided with a number of substantially equally thick layers, the etching rate of which in a given etchant increases substantially proportionally to the sequence in which the layers are formed, and that a cross-sectional surface of the layers is exposed to the etchant, causing grooves to be formed in the surface, which form an echelon grating.

2. A method as claimed in Claim 1, characterized in that the thickness of the individual layers is 1 - 3µm.

3. A method as claimed in Claim 1 or 2, characterized in that the etching depth of the individual layers is from 0.1 to 0.3µm.

4. A method as claimed in any of the Claims 1 to 3, characterized in that the blaze angle is 10 - 20°.

5. A method as claimed in any of the preceding Claims, characterized in that the layers are formed by means of a non-isothermal plasma CVD method.

6. The use of the grating manufactured by means of the method as claimed in any of the preceding Claims in the telecommunication industry.

**Revendications**

1. Méthode pour la fabrication d'un réseau optique, caractérisée en ce qu'une surface d'un substrat est munie d'un nombre de couches d'épaisseur pratiquement égale, dont la vitesse de décapage dans un agent de décapage déterminé augmente d'une façon pratiquement proportionnelle au numéro d'ordre de la formation des couches et qu'une face de section transversale de la couche est exposée à l'agent de décapage de façon que cette face soit munie de marches, qui constituent un réseau optique en forme d'escalier.

2. Méthode selon la revendication 1, caractérisé en ce que l'épaisseur des couches arbitraires est de 1 à 3µm.

3. Méthode selon la revendication 1 ou 2, caractérisée en ce que la profondeur de décapage des couches arbitraires est de 0,1 à 0,3μm.

4. Méthode selon l'une des revendications 1 à 3, caractérisé en ce que l'angle de "blaze" est de 10 à 20°.

5. Méthode selon l'une des revendications précédentes, caractérisé en ce que les couches sont formées à l'aide d'un procédé DVC à plasma non isotherme.

6. Application du réseau fabriqué à l'aide de la méthode selon l'une des revendications précédentes dans la technique de la télécommunication.

FIG.1

FIG.2

FIG.3